# EUROPEAN PATENT APPLICATION

(11) **EP 4 071 685 A1**
(43) Date of publication of application: **12.10.2022**
(21) Application number: 21166886.8
(22) Date of filing: 06.04.2021
(51) Int. Cl.: G06Q 10/10

(54) **METHOD AND SYSTEM FOR RESERVING TIME FOR VACCINATIONS OR MEDICAL TESTS**

(71) Applicant: iFlyIT Oy, 67800 Kokkola (FI)
(72) Inventor: KAUPPINEN, Marko, 65630 Mustasaari (FI); RAWLINGS, James Christian, 00700 Helsinki (FI)
(74) Representative: Berggren Oy

(57) **Abstract**

Method and system (1) for reserving time for vaccinations or medical tests, in which method persons (3) reserve, or are invited to reserve, time for vaccination or test at a specific place of procedure (4) for the reserved action, wherein the place of procedure (4) is an airport or nearby facility, and a certificate of the completed action and/or the result is provided for the person.

## Description

The present invention relates to providing vaccinations or medical tests to people, especially for travel related purposes. More precisely the present invention relates to such a method and system.

Vaccination process starts typically from a person's need to obtain a vaccination for example for travelling purposes, or from the national health organization's need to vaccinate certain part or whole of the nation's population. The first step in this process is then reservation of suitable time for the vaccination. After that the person goes to the named place to receive the vaccination, and the process is done. If second vaccination is required, then a time for the second vaccination is typically reserved if the second vaccination needs to be done within couple of weeks or months, for example, from the first.

In normal situations the above-described process works just fine, but when a large population needs to be vaccinated quickly, problems arise. And these problems increase in situations where the vaccination needs to fulfill cool-chain and temperature-controlled transportation requirements and/or the required vaccinations are not readily available.

These problems include, among others, providing sufficient amounts of vaccines to the specified place of vaccination or centers timely and safely. On the other hand, the recipients of these vaccinations need also to be at the place of vaccination in a timely manner. Due to the present Covid-pandemic, and to other future pandemics, there is a great need to provide a solution for overcoming these problems.

In addition to vaccinations, people travelling to other countries may need to, and often must under the present Covid-pandemic situation, provide a medical test result(s) in order to be allowed to travel and/or enter to the other country(s). The obtaining of these kind of test certificates, however, can be problematic and burdensome, especially in a form accepted by the officials of the other countries.

In order to overcome, or at least greatly lessen, the above-mentioned problems, the present invention provides a new solution for providing vaccinations or medical tests for persons. The present invention is applicable for single person requiring a specific vaccination or medical test, but can also be used for handling mass vaccinations, for example.

In the method of the invention for providing vaccinations or medical tests persons reserve, or are invited to reserve, time for vaccination or test at a specific place of procedure for the reserved action, wherein the place of procedure is an airport or a nearby facility, and a certificate of the completed action and/or the result is provided for the person.

In the present invention the utilization of airports as a place of procedure, such as a place of vaccination and/or a place of testing, allows safe and proper handling and transportation of vaccines from the manufacturer to the airport, which typically comprises the required facilities to store the vaccines. Further, airports are built, equipped, and staffed to handle large amounts of people effectively, and are typically easily accessible with public transportation, for example. Airports are also good places to implement travel related medical quick tests, because the related test results and certificates can be easily connected to the travel data of the person, or a separate test result certificate can be provided, in an internationally recognized form to the travelling person. All these factors contribute to the effective utilization of airports as vaccination and/or medical test centers.

The certificate in the present invention can advantageously be an electronic certificate, which can easily be linked to the persons passport or other travel data.

In addition to airports, the advantages apply also to facilities near airport, to which facilities the vaccines can be delivered safely and quickly from the airport, and which facilities can handle mass of people effectively and safely. These nearby facilities are typically located within 30 km radius from the airport, so that the required cool-chain transportation can be guaranteed.

The present invention can be implemented as a continuous health care service for individuals, or as a mass vaccination service, where the place of procedure is located at the airport, or near vicinity of the airport, as a shop or a boutique such like the present airport shops. This allows individuals to get their vaccinations and/or the medical tests, such as ones required for travelling to specific areas together with related certificates, as a part of their travel process.

In the present invention the medical tests are preferably quick test, so that the certificate of the test result can be provided sufficiently quickly for the person travelling to a specific destination. Typically, this means that the medical test analysis result should be available within hours, preferably within one hour, from obtaining the sample for the test. However, if the test analysis so requires, the traveler can give the sample for the test at the location of procedure one or two days before the travel date, so that a certificate of the test analysis result is available at the travel date.

In an embodiment of the method of the invention the preliminary vaccination times are provided for person's reservation based on estimated time of arrival and quantity of the vaccines to the place of procedure, and the actual vaccination time for a person is confirmed once the actual delivery of the vaccines to the place of procedure is confirmed.

In this embodiment the confirmation of the reserved time after the receipt of the vaccine at the defined airport is confirmed also allows accurate provision of the vaccines to each recipient in an effective manner, which guarantees a fast and effective vaccination process even, and especially, for larger groups of people.

In an embodiment of the method of the invention the person's arrival to the place of procedure for the vaccination or test is registered, and person's vaccination or test result is registered after the related action is completed. This allows following of persons in the vaccination or test process at the place of procedure and guaranteeing the receipt of the vaccination or obtaining a test sample from the person.

In an embodiment of the method of the invention the person can request a specific vaccine or medical test.

In an embodiment of the method of the invention the method is implemented with an electronic system.

The present invention also provides a system for reserving time for vaccination or medical test, which system comprises an electronic system for reserving time for the vaccination or test at a specific place of procedure for the reserved action, wherein the place of procedure is an airport or nearby facility, and an electronic certificate of the completed action and/or the result is created and stored. The electronic certificate may be stored on the system and/or on the person's personal electronic device.

In an embodiment of the system of the invention the electronic system provides preliminary vaccination times for person's selection based on the estimated time of arrival and quantity of the vaccines to the place of vaccination, and the electronic system confirms the actual vaccination time to the person once the actual delivery of the vaccines to the place of procedure is confirmed.

In an embodiment of the system of the invention the person's arrival to the place of vaccination to receive the vaccination is registered in the electronic system.

In an embodiment of the system of the invention the electronic system comprises a web application and/or mobile application for accessing the system.

More precisely the features defining a method in accordance with the present invention are presented in claim 1, and the features defining a system in accordance with the present invention are presented in claim 6. Dependent claims present advantageous features and embodiments of the invention.

Exemplifying embodiment of the invention and its advantages are explained in greater detail below in the sense of example and with reference to accompanying drawings, where
Figure 1 shows schematically an embodiment of the system of the invention,
Figure 2 shows schematically an example of the steps of the system of the invention for vaccination time reservation,
Figure 3 shows schematically an example of the steps of the system of the invention for medical test time reservation,
Figure 4 shows schematically an example of the steps of the system of the invention for the user.

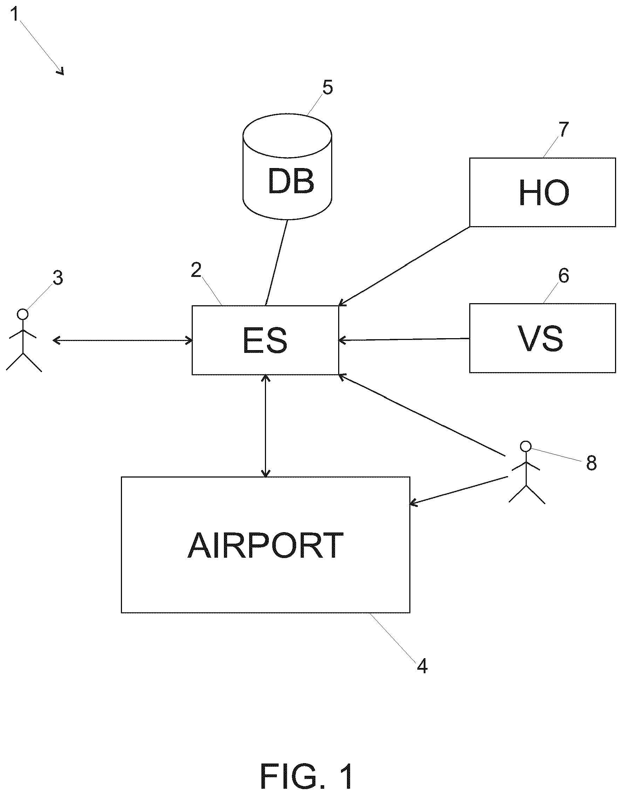

In figure 1 is shown an embodiment of the system 1 of the present invention, which comprises an electronic system 2. The electronic system is in data contact with the user 3 of the system and with the place of procedure 4, which in this embodiment is an airport. The electronic system 2 receives vaccine availability data from vaccine supplier 6. The system 2 stores the collected data to a data base 5. The electronic system 2 is also accessible by the national health organization 7. Further, the electronic system 2 is also accessible to the required administrative persons 8 directly, or via the place of procedure 4, in order to input information relating to, and/or monitor, logistics, customs, data protection, etc.

The parts of the system 1 can transfer and receive data with suitable data transfer means, which include networks, such as internet, mobile communication network, Wi-Fi network, and their combinations, for example.

The user 3 can contact the electronic system 2 with a suitable electronic device, such as computer, mobile phone, PDA, or other data processing device capable communicating via the data transfer means.

The electronic system 2 may comprise one or more data processing devices capable to communicating via the said data transfer means, which data processing devices comprise a controller with one or more processors suitable to perform an operator (user)-initiated and/or computer program (software)-initiated instructions, and process data in order to run applications. The controller may also comprise at least one memory or memory part that stores and maintains data, which data may be instructions, computer programs, and data files.

The national health organization 7 has generally the authority to allow distribution of a specific vaccine in a specific country, especially in the cases of mass vaccinations, so it is necessary also for them to have a secure access to the electronic system 2.

It is also important to notice, that the data input and handled with the electronic system 2 is highly sensitive personal data, which in many jurisdictions falls under specific national and international laws and regulations. Thus, the data in the electronic system 2 needs to be protected with encryption, preferably utilizing blockchain technology, and the user's 3 access to the electronic system must preferably be secure. Further, in the electronic system 2 it is preferable that the specific personal data allowing the combining of information in the electronic system to a specific individual is transformed to an anonymous identifier. This allows that the electronic system 2 to be an anonymous system or platform, wherein the user 3 have an anonymous digital footprint.

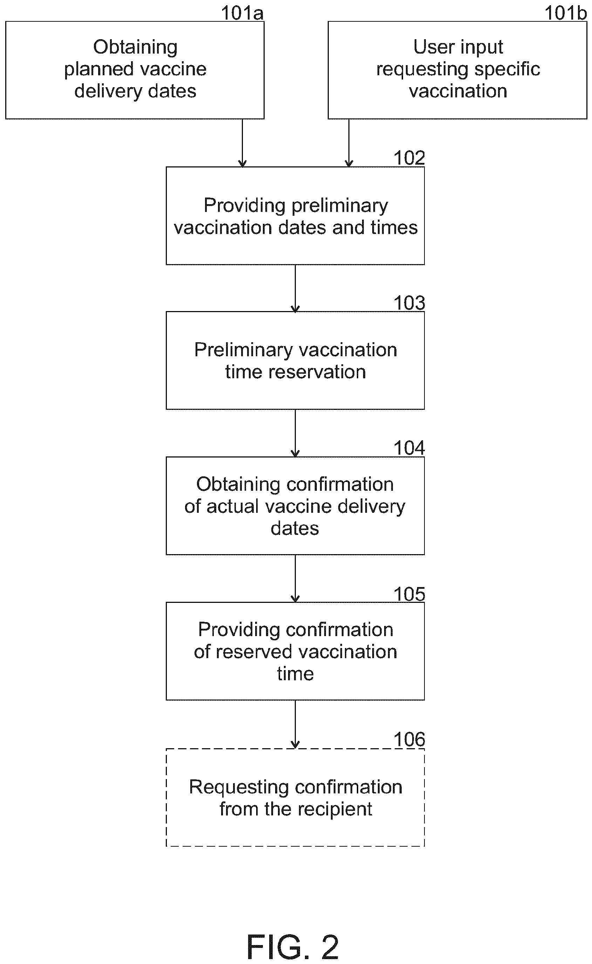

Figure 2 shows an example of the steps for reserving vaccination time.

The reservation process starts by the electronic system 2 obtaining planned delivery dates and amounts of the vaccine to the place of procedure 4 from the vaccine supplier 6, as shown in box 101a. Together with the estimated vaccine delivery dates the supplier 6 also provides the estimated delivery amounts of the vaccine.

Alternatively, the vaccination reservation process can be started by the user 3, by inputting in the system request for a specific vaccination, as shown in box 101b. This allows the use of the electronic system 2 by individual users 3 to "order" and obtain different vaccinations. The availability of specific vaccines can be provided to the user 3 with a selectable listing of available vaccines, for example. If the required vaccination is not included in the listing, the user can request it via the electronic system 2, which would then check the availability of that vaccine and contact the user once the related expected delivery data is available.

Based on the expected delivery data obtained, the electronic system 2 provides preliminary vaccination dates and times for reservations to the users 3, as shown in box 102. The preliminary vaccination dates and times can be shown to the users in the form of a calendar, for example, from wherein the suitable dates and times for vaccinations are shown to the user. Further, the electronic system 2 should also obtain sufficient information from the user 3 to define the user's age, demographics and location, together with other relevant information, so that proper and correct preliminary vaccination dates and times can be offered to the user.

From the presented preliminary vaccination dates and times shown by the electronic system 2 the user 3 selects himself most suitable one, as shown in box 103, thus reserving him-/herself the preliminary vaccination date and time. The electronic system 2 can also confirm the reservation of the preliminary vaccination time to the user 3 in a suitable way, such as with an email or a SMS, for example.

Once the vaccine supplier 6 can confirm the actual amounts of the vaccine to be delivered and their delivery dates and times, this information is input to the electronic system 2, as shown in box 104.

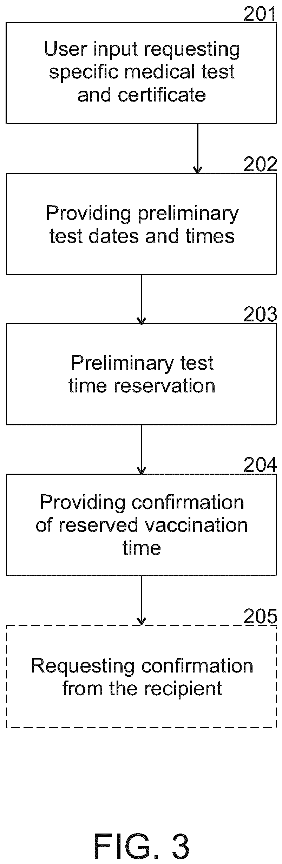

Based on the confirmed delivery data from the vaccine supplier 6, the electronic system 2 confirms the preliminary vaccination time reservation to the user 3, as shown in box 105. The electronic system 2 can simultaneously provide further information relating to the vaccination, such as travel information to the vaccinations location 4, medical information about the vaccine, etc. to the user 3. The electronic system 2 can also request final confirmation from the user 3, that the user will be coming to have the vaccination, as shown in box 106. The confirmation request shown in box 106 can also be implemented to be automatic, such as automatic registering of the user's 3 arrival at the place of vaccination 4, as discussed below with reference to figure 3.

If the information obtained from the vaccine supplier 6 indicate that there will not be vaccine available for the user on the reserved preliminary vaccination time, the system 2 will inform this to the user 3 by cancelling the preliminary reservation and requesting the user to reserve a new preliminary vaccination time from the available times, similarly than shown in box 102.

Figure 3 shows an example of the steps for reserving medical test time, which largely correspond to the process shown in figure 2 in relation to vaccinations.

The medical test reservation process is started by the user 3, by inputting in the system a request for a specific medical test or a specific medical test certificate, as shown in box 201. This allows the use of the electronic system 2 by individual users 3 to "order" and obtain required medical tests and related certificates. The availability of specific tests can be provided to the user 3 with a selectable listing, for example. If the required test is not included in the listing, the user can request it via the electronic system 2, which would then check the availability of that test and contact the user once the related test is available.

Based on the selection of the user 3, the electronic system 2 provides preliminary vaccination dates and times for reservations to the users, as shown in box 202. The preliminary test dates and times can be shown to the users in the form of a calendar, for example, from wherein the suitable dates and times for vaccinations are shown to the user. Further, the electronic system 2 can also request sufficient additional information from the user 3 to define the user's age, demographics and location, together with other relevant information, so that proper and correct preliminary test dates and times can be offered to the user.

From the presented preliminary test dates and times shown by the electronic system 2 the user 3 selects himself most suitable one, as shown in box 203, thus reserving him-/herself the preliminary test date and time. The electronic system 2 can also confirm the reservation of the preliminary test time to the user 3 in a suitable way, such as with an email or a SMS, for example.

Final confirmation, once the availability of the specific test and the place of testing 4 is confirmed, or suitable time before the reserved test date and time, is sent to the user 3 in suitable manner by the electronic system 2. This final confirmation can be made with an email or a SMS, for example.

The electronic system 2 can also request final confirmation from the user 3, that the user will be coming to take the test and give the sample for the test, as shown in box 206. The confirmation request shown in box 206 can also be implemented to be automatic, such as automatic registering of the user's 3 arrival at the place of procedure 4, as discussed below with reference to figure 3.

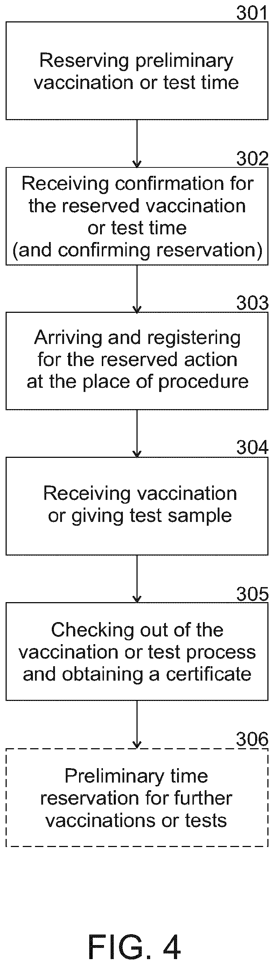

Figure 4 shows an example of the steps of the system 1 for the user 3.

The user 3 contacts the electronic system 2 for obtaining a vaccination or medical test of own motion, or by request of the national health organization, for example. First, the user 3 reserves preliminary vaccination or test time from the electronic system 2, as shown in box 301, and waits until the electronic system 2 confirms reserved time, as shown in box 302.

After the time reservation is confirmed, the user 3 arrives to the place of procedure 4 at the reserved date and time, as shown in box 303. When the user arrives to the place of procedure 4, an airport in this embodiment, the arrival of the user is registered in the electronic system 2. Based on this registration the electronic system 2 can guide the user 3 to correct place, or gate, in the place of procedure 4 to receive the vaccination or test, as shown in box 304. The registration of user's 3 arrival at the place of procedure 4 can be implemented automatically, for example with Low Energy Beacons, or it may require user actions, such as scanning QR code, for example.

Immediately after receiving the vaccination or giving the test sample, or at the latest when the user 3 leaves the place of procedure 4, the user 3 is checked out from the vaccination or test process at the electronic system 2 in suitable way, as shown in box 305. This checking out confirms that the user 3 has received the vaccination or given the sample. In the case of vaccination, an electronic certificate of the vaccination is added to the persons data in the electronic system 2. In the case of a medical test, a certificate of the test results will be added to the persons data once the testing of the sample is done.

After the confirmation of the receipt of the vaccination or the test sample has been entered in the electronic system 2, the electronic system may prompt the user 3 to select preliminary vaccination or medical test time reservation, if further, or other, vaccinations or tests are required, as shown in box 306.

The vaccination process at the place of procedure 4 can be implemented with an electronic vaccination card in the electronic system 2, for example, which can be electronically connected to the passport number of the user 3, for example. Thus, in the context of the present invention, the vaccination process can follow similar steps as an electronic check-in and boarding of a flight under the related IATA standard, and the electronic data is preferably in accordance with IATA travel documentations standard. In this process check-in would correspond the user's 3 registration at the place of procedure 4, boarding would correspond the user's registration to receive the actual vaccination, and check-out would correspond the user's registration out of the vaccination process after receipt of the vaccination, which check-out would create an electronic certificate of the received vaccination. QR codes can be used in these different stage registrations, for example.

The specific exemplifying embodiment of the invention shown in figures and discussed above should not be construed as limiting. A person skilled in the art can amend and modify the embodiment described in many evident ways within the scope of the attached claims. Thus, the invention is not limited merely to the embodiment described above.

## Claims

1. Method for reserving time for vaccinations or medical tests, in which method persons (3) reserve, or are invited to reserve, time for vaccination or test at a specific place of procedure (4) for the reserved action, **characterized in that** the place of procedure (4) is an airport or nearby facility, and a certificate of the completed action and/or the result is provided for the person.

2. Method according to claim 1, wherein the preliminary vaccination times are provided for person's (3) reservation based on estimated time of arrival and quantity of the vaccines to the place of procedure (4), and the actual vaccination time for a person is confirmed once the actual delivery of the vaccines to the place of procedure is confirmed.

3. Method according to claim 1 or 2, wherein the person's (3) arrival to the place of procedure (4) is registered, and person's vaccination or test result is registered after the related action is completed.

4. Method according to any of claims 1-3, wherein person (3) can request a specific vaccine or test.

5. Method according to any of claims 1-4, wherein the method is implemented with an electronic system (2).

6. System (1) for reserving time for vaccination or medical test, which system comprises an electronic system (2) for reserving time for the vaccination or test at a specific place of procedure (4) for the reserved action, **characterized in that** the place of procedure (4) is an airport or nearby facility, and an electronic certificate of the completed action and/or the result is created and stored.

7. System (1) according to claim 6, wherein the electronic system (2) provides preliminary vaccination times for person's (3) selection based on the estimated time of arrival and quantity of the vaccines to the place of procedure (4), and the electronic system confirms the actual vaccination time to the person once the actual delivery of the vaccines to the place of procedure is confirmed.

8. System (1) according to claim 6 or 7, wherein the person's (3) arrival to the place of procedure (4) for the received action is registered in the electronic system (2).

9. System (1) according to any of claims 6-8, wherein the electronic system (2) comprises a web application and/or mobile application for accessing the system.
